**Europäisches Patentamt**

**European Patent Office**

**Office européen des brevets**

(19)

(11) Numéro de publication : **0 360 652 B1**

## (12) FASCICULE DE BREVET EUROPEEN

(45) Date de publication du fascicule du brevet :
**30.09.92 Bulletin 92/40**

(51) Int. Cl.⁵ : **G01V 11/00,** G01V 1/18

(21) Numéro de dépôt : **89402437.1**

(22) Date de dépôt : **07.09.89**

(54) **Système de réception de signaux pouvant être couplé avec la paroi d'un puits ou forage.**

(30) Priorité : **21.09.88 FR 8812422**

(43) Date de publication de la demande :
**28.03.90 Bulletin 90/13**

(45) Mention de la délivrance du brevet :
**30.09.92 Bulletin 92/40**

(84) Etats contractants désignés :
**DE GB IT NL**

(56) Documents cités :
**FR-A- 2 564 599**
**US-A- 4 578 785**
**US-A- 4 651 311**

(73) Titulaire : **INSTITUT FRANCAIS DU PETROLE**
**4, Avenue de Bois Préau**
**F-92502 Rueil-Malmaison (FR)**

(72) Inventeur : **Meynier, Patrick**
**23 bis, rue des Garennes**
**F-78400 Chatou (FR)**

EP 0 360 652 B1

Jouve, 18, rue Saint-Denis, 75001 PARIS

## Description

L'invention a pour objet un système de réception de signaux pouvant être couplé avec la paroi d'un puits ou d'un forage. Un tel système peut être utlisé notamment pour collecter des signaux reçus par un ensemble de capteurs en contact avec les parois d'un puits, à les numériser et les mémoriser et, à les transmettre sous une forme codée à une station de commande et d'enregistrement en surface.

Les signaux captés sont par exemple des ondes qui se sont propagées depuis une source sismique disposée en surface ou dans un autre puits et ont été réfléchies par les discontinuités du sous-sol.

L'acquisition de données de mesure dans un forage est réalisée en général en descendant dans celui-ci des capteurs associés à une sonde unique ou un ensemble de plusieurs sondes suspendues à un câble multi-fonctions. La sonde ou chacune d'elles comporte un corps allongé et des moyens d'ancrage permettant de la coupler avec les parois du puits. Les capteurs peuvent être disposés dans des patins qui sont amenés au contact des parois par action sur les moyens d'ancrage. Ils peuvent être disposés également dans le corps de la sonde et les moyens d'ancrage sont agencés pour déporter latéralement le corps de manière à amener les capteurs au contact des parois. Les moyens d'ancrage comportent par exemple des vérins alimentés en fluide sous pression par un système hydraulique à l'intérieur du corps et la sonde ou bien encore des ressorts dont la détente est provoquée par déblocage d'un verrou.

Le câble multi-fonction comporte le plus souvent une pluralité de lignes conductrices permettant la transmission de courants électriques pour l'alimentation du moteur et de signaux de toute nature. Il s'agit par exemple de signaux de commande transmis à la sonde depuis un laboratoire de surface et de signaux de réponse envoyés depuis la sonde. Les signaux de réponse sont constitués, soit de signaux de contrôle ou de test, soit de données mesurées par les capteurs de la sonde.

Différentes sondes sont décrites par exemple dans les brevets français FR-2.501.380, 2.548.727 ou 2.564.599 ou le brevet US No. 4 578 785.

La réalisation de coupes sismiques étendues facilement exploitables passe par l'emploi de dispositifs de réception capables de détecter des signaux sismiques en un nombre important de points à des niveaux de profondeurs différents. Le dispositif de réception doit pouvoir être déplacé rapidement le long du puits. En chaque emplacement d'ancrage, le couplage des capteurs avec les parois doit être le plus efficace possible de manière à capter les signaux sismiques et non les signaux parasites qui se propagent dans la colonne d'eau remplissant généralement le puits. Le dispositif d'ancrage à utiliser devient de plus en plus complexe et difficile à mettre en oeuvre.

Par le brevet US 4 236 113, on connaît une sonde de diagraphie électrique comportant une chambre centrale délimitée extérieurement par une gaine expansible munie extérieurement d'électrodes et des moyens hydrauliques dans une partie terminale de la sonde pour dilater à volonté la chambre et plaquer les électrodes contre la paroi du puits.

Le brevet FR 2 564 599, montre un outil de puits à au moins deux corps, l'un au dessous de l'autre ou l'un suspendu à l'intérieur de l'autre, ces deux corps pouvant être séparément plaqués contre la paroi d'un puits par ouverture de bras d'ancrage au moyen de vérins.

La pression hydraulique est générée dans l'un des corps et transmis à l'autre par un câble hydraulique.

Le système selon l'invention est défini principalement par la revendication 1. Il comporte essentiellement un corps avec deux compartiments, l'un contenant des moyens pour délivrer sur commande un fluide sous pression dont la pression statique est maintenue constamment en équipression avec la pression dans le puits à la profondeur d'utilisation, et un deuxième compartiment contenant un ensemble de commande et d'acquisition de signaux acoustiques ou sismiques. Il comporte aussi au moins une enceinte avec une paroi latérale souple à laquelle est intégrée au moins un récepteur acoustique ou sismique. Cette enceinte est suspendue sous le corps et communique avec le premier compartiment par un câble hydraulique. Les conducteurs électriques associés au capteur ou à chaque capteur intégré à la paroi souple remontent le long du câble hydraulique vers le corps et pénètrent dans le deuxième compartiment par des traversées étanches. Le système peut comporter un chapelet d'enceintes expansibles ou une seule enceinte allongée avec une pluralité de récepteurs répartis sur sa longueur.

Avec cet agencement :

– les récepteurs acoustiques ou sismiques intégrés à la paroi souple sont étroitement appliqués contre la paroi du puits;

– l'enceinte ou chacune d'elles ne contient que les récepteurs acoustiques ou sismiques. Elle est très légère et découplée du corps qui est plus massif. Le câble hydraulique souple qui les relie évite la transmission aux récepteurs dans l'enceinte des vibrations qui peuvent être générées dans le corps par le fonctionnement des moyens de pression hydrauliques;

– les lignes électriques passant de chaque enceinte au deuxième compartiment du corps le long du câble hydraulique transmettant le fluide de gonflage des enceintes, on évite l'emploi de câbles multi-fonctions avec des connecteurs particuliers mixtes pour relier à la fois des lignes électriques et des tuyauteries pour fluide sous pression, qui sont plus onéreux.

D'autres caractéristiques et avantages du système selon l'invention apparaîtront à la lecture de la descripton de deux modes de réalisation donnés à titre d'exemple non limitatifs, en se référant aux dessins annexés où :

– la figure 1 montre une vue d'ensemble schématique d'un premier mode de réalisation du système comportant plusieurs enceintes raccordées les unes aux autres;

– la figure 2 représente plus en détail l'agencement d'une de ces enceintes;

– la figure 3 montre schématiquement un corps d'outil contenant un dispositif pour appliquer aux enceintes un fluide sous pression et les dilater, ainsi qu'un compartiment pour un dispositif électronique d'acquisition de données; et

– la figure 4 montre schématiquement un second mode de réalisation du système selon l'invention où l'enceinte expansible est un tube allongé.

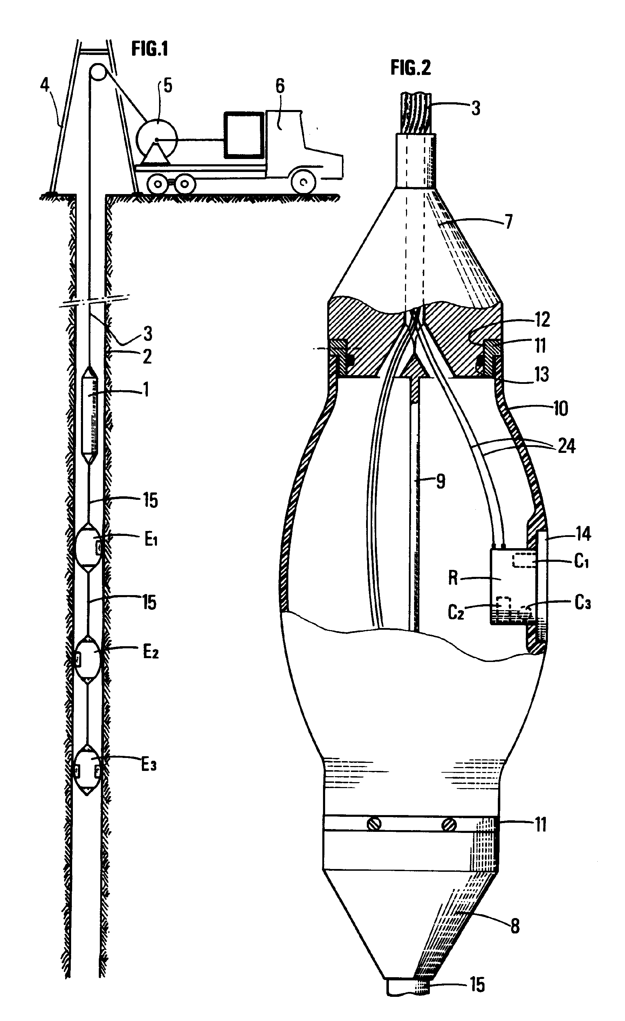

Suivant le mode de réalisation de la figure 1, le système selon l'invention comporte un outil de puits 1 descendu dans un puits ou forage 2 à l'extrémité d'un câble électro-porteur 3 relié à une structure de support 4 disposée en surface. Le câble 3 s'enroule sur un touret de stockage 5 disposé par exemple sur un camion-laboratoire 6. Au dessous de l'outil de puits 1, sont suspendues plusieurs enceintes expansibles E1, E2, E3 etc. Chacune d'elles comporte (figure 2) une armature rigide constituée de deux embouts tronconiques 7, 8 opposés l'un à l'autre qui sont reliés et maintenus rigidement écartés l'un de l'autre par une barre d'assemblage 9. Une jupe déformable 10 est disposée entre les deux embouts tronconiques 7, 8 et délimite avec eux une enceinte étanche. La jupe déformable 10 est constituée d'un tube en élastomère par exemple dont les extrémités sont fixées par le procédé dit de surmoulage respectivement à deux bagues rigides 11. Chaque embout tronconique 7, 8 est pourvu d'un épaulement circulaire 12 de section adaptée à la section intérieure des deux bagues 11 et d'une rainure circulaire pour un joint d'étanchéité 13. L'engagement des deux bagues 11 sur les deux épaulements circulaires 12 assure la fermeture étanche de chacune des enceintes.

A la paroi déformable de chaque enceinte, est associé au moins un ensemble récepteur de signaux R. Cet ensemble comporte un boîtier pourvu d'une embase 14 et d'au moins un logement pour un élément capteur. Le boîtier comporte par exemple trois logements pour trois capteurs C1, C2, C3 disposés de manière à capter les composantes de signaux suivant trois axes orthogonaux. Chaque embase 14 est intégrée à la jupe tubulaire 10 par surmoulage.

Chaque enceinte étanche est reliée aux enceintes adjacentes par un élément de câble ou de tuyau porteur flexible 15. Par l'intermédiaire de ces éléments de tuyau 15, toutes les enceintes expansibles communiquent avec un système hydraulique contenu dans l'outil de puits 1. Le corps de l'outil comporte une cavité cylindrique 16 séparée en deux chambres 17, 18 par un piston libre 19 pourvu à sa périphérie de joints d'étanchéité 20. Dans l'une des deux chambres 18 est disposée une pompe hydraulique 21 dont l'entrée communique avec une crépine de filtrage 22 et la sortie, par l'intermédiaire d'une électro-vanne à deux positions 23, avec l'élément de tuyau reliant le corps 1 à la première enceinte expansible E1 (fig. 1). La chambre 18 contenant la pompe hydraulique 21 est remplie d'huile. L'autre chambre 17 communique directement avec l'extérieur du corps.

Le déplacement libre du piston dans la cavité 16 permet de maintenir le liquide hydraulique en équipression avec le fluide contenu dans le puits.

La pompe 21 a pour effet de créer une surpression par rapport à la pression statique régnant dans le puits, quelle que soit la profondeur de fonctionnement du système de réception. Dans une première position (position de repos) l'électro-vanne 23 fait communiquer la portion de tuyau (15) avec l'intérieur de la chambre 18. Dans une seconde position elle met la même portion de tuyau en communication avec la sortie de la pompe 21.

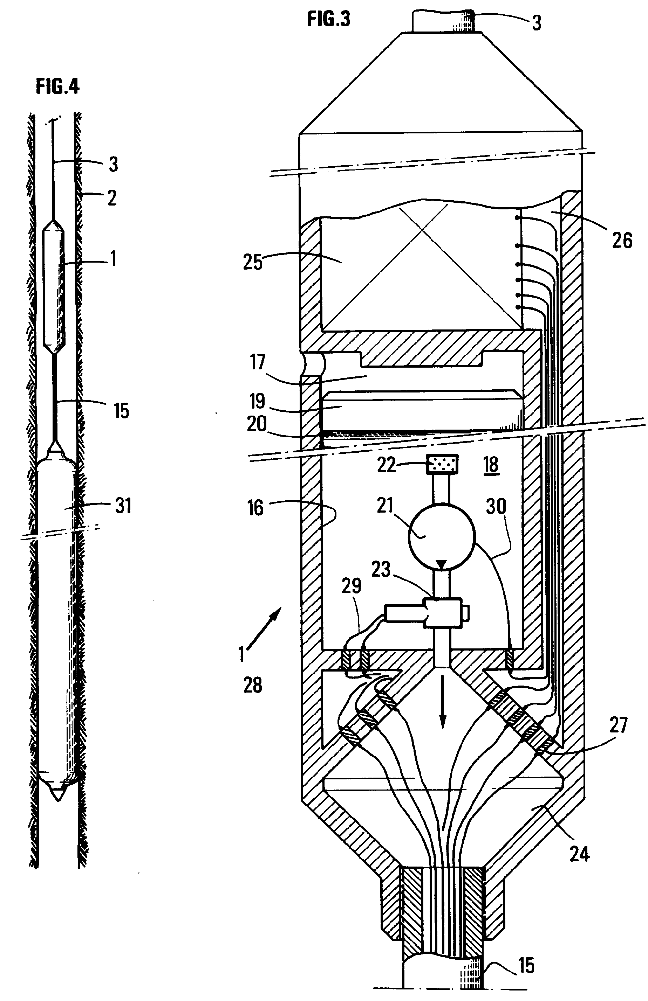

A chaque ensemble récepteur 13 sont associées une ou plusieurs lignes 24 pour la transmission des signaux captés. Les signaux délivrés par tous les ensembles récepteurs R sont collectés par un dispositif de commande et d'acquisition 25 disposé dans une chambre supérieure 26 du corps 1 de l'outil (figure 3). Les lignes 24 issues des ensembles récepteurs R d'une quelconque enceinte expansible passent le long des différentes sections de tuyau 15 et traversent les autres enceintes intercalées entre elle et l'outil de puits 1. Dans celui-ci, par des traversées étanches 27, les lignes 24 pénètrent dans une cavité 28 isolée de la pression extérieure et communiquant avec la chambre supérieure 26 du corps contenant le dispositif d'acquisition 25, et sont connectées à ses différentes entrées.

De la même façon les conducteurs électriques 29, 30 permettant d'actionner respectivement l'électro-vanne 23 et la pompe 21 pénètrent dans la cavité par des traversées étanches et rejoignent le dispositif de commande et d'acquisition 25.

On utilise par exemple le dispositif de commande et d'acquisition décrit dans la demande de brevet français publiée No. 2 616 230 pour collecter les signaux produits par tous les ensembles récepteurs, les échantillonner, les numériser et sur commande du laboratoire en surface, les transmettre sous une forme codée.

Les signaux de commande issus du laboratoire 6 et les signaux émis en réponse par le dispositif de commande et d'acquisition 25 dans le corps de l'outil, sont transmis par l'intermédiaire des différents conducteurs électriques du câble électro-porteur 3. Le dispositif fonctionne de la façon suivante :

– L'électro-vanne 23 étant en position de repos, le liquide à l'intérieur des différentes enceintes E1, E2, E3 etc, des sections de tuyau intercalées et de la chambre 18 est en équi-pression avec le fluide contenu dans le puits. Le système de réception peut donc être déplacé le long du puits et amené par action sur le treuil jusqu'à une position où l'on veut effectuer des relevés sismiques par action sur le treuil.

– Depuis le laboratoire en surface 6, on commande la mise en marche de la pompe hydraulique 21 et l'excitation de l'électro-vanne 23. Par l'intermédiaire des sections de tuyau intercalées 15, la surpression créée par la pompe est transmise à toutes les enceintes E1, E2, E3... qui se dilatent. Les jupes déformables 10 viennent s'appliquer contre la paroi du puits et les ensembles récepteurs R intégrés dans celles-ci, se trouvent plaqués contre les formations souterraines.

Par cette mise en pression, on réalise en une seule opération l'ancrage des enceintes et le couplage des capteurs. La souplesse des jupes leur permet de s'adapter localement à la forme du puits et donc de réaliser un ancrage correct des eneintes et un bon couplage des capteurs. La réception de signaux à capter peut donc s'effectuer de manière satisfaisante.

Suivant le mode de réalisation de la figure 4, le système selon l'invention peut comporter aussi une seule enceinte 31 expansible de grande longueur comportant une pluralité d'ensembles de réception R intégrés à sa paroi et disposés à distance les uns des autres. Le système hydraulique de gonflage 21-23 et le dispositif de commande 25 peuvent être disposés aussi dans un corps d'outil 1 surmontant l'enceinte expansible.

## Revendications

1. - Système de réception et d'acquisition de signaux acoustiques ou sismiques dans un puits ou forage, comportant au moins une enceinte close expansible (E1) laquelle enceinte est pourvue d'une paroi extérieure souple (10), caractérisé en ce qu'il comporte au moins un récepteur acoustique ou sismique (C1-C3) dans un boitier (R) intégré à la paroi souple (10) de ladite enceinte associé à des conducteurs électriques (24), un corps (1) descendu dans un puits à l'extrémité d'un câble support (3) incluant des lignes de transmission de signaux reliées à un ensemble de commande et d'enregistrement en surface, et des lignes d'alimentation électrique, le corps comportant un premier compartiment (16) contenant des moyens (21, 23) pour délivrer sur commande un fluide sous pression et des moyens (19) d'équilibrage permanent de la pression statique régnant dans le puits à la profondeur d'utilisation, un deuxième compartiment (26) pour un ensemble de commande et d'acquisition (25), ladite enceinte étant disposée sous le corps et reliée à lui par un câble hydraulique souple (15) faisant communiquer l'intérieur de l'enceinte avec le premier compartiment du corps, les conducteurs électriques (24) associés à chacun des récepteurs (C1-C3) étant placés à l'intérieur du câble hydraulique et reliés avec l'ensemble de commande et d'acquisition dans le deuxième compartiment par l'intermédiaire de traversées étanches (27, 29) entre le premier et le deuxième compartiment (16, 26).

2. - Système selon la revendication 1, caractérisé en ce qu'il comporte un chapelet de plusieurs enceintes expansibles (E1-E3) disposées sous le corps (1) et suspendues les unes au dessous des autres par des éléments de câble hydraulique (15) qui les font toutes communiquer avec les moyens délivrant du fluide sous pression dans le premier compartiment (16) du corps (1), où passent les conducteurs électriques reliant les différents récepteurs sismiques ou acoustiques à l'ensemble de commande et d'acquisition (25) dans le corps (1).

3. - Système selon la revendication 1, caractérisé en ce qu'il comporte au moins une enceinte tubulaire expansible reliée hydrauliquement aux moyens délivrant un fluide sous pression dans le premier compartiment du corps, ladite enceinte renfermant plusieurs récepteurs acoustiques ou sismiques intégrés à la paroi souple à des emplacements différents le long de ladite enceinte, les conducteurs associés à ces différents récepteurs remontant vers l'ensemble de commande et d'acquisition dans le deuxième compartiment le long et à l'intérieur du câble hydraulique reliant ladite enceinte au corps.

4. - Système selon la revendication 1, caractérisé en ce que chaque capteur (R) est un géophone.

5. - Système selon la revendication 1, caractérisé en ce que chaque élément de réception (R) comporte un géophone tri-axial.

6. - Système selon la revendication 1, caractérisé en ce que les moyens d'injection de fluide sous pression comportent une pompe (21) des circuits hydrauliques et des moyens pour maintenir le fluide hydraulique à une pression minimale égale à la pression régnant dans le puits.

## Patentansprüche

1. System zum Empfang und zur Erfassung von akustischen oder seismischen Signalen in einem Schacht oder Bohrloch, das mindestens einen ausdehnbaren geschlossenen Behälter (E1) umfaßt, wobei dieser Behälter mit einer weichen Außenwand (10) versehen ist, dadurch gekennzeichnet, daß es mindestens einen an elektrische Leitungen (24) angeschlossenen akustischen oder seismischen Empfänger (C1-C3) in einem Gehäuse (R), das in die weiche Wand (10) des Behälters integriert ist, sowie einen Körper (1) umfaßt, der am Ende eines Tragkabels (3) in ein Bohrloch gesenkt wird, wobei obergenanntes Tragkabel Leitungen zur Signalübertragung, die mit einem auf der Oberfläche befindlichen Steuer- und Registrierkomplex verbunden sind, und Leitungen zur Stromversorgung enthält, wobei der Körper einen ersten Raum (16) umfaßt, der Mittel (21, 23) zur gesteuerten Abgabe einer unter Druck stehenden Flüssigkeit und Mittel (19) zum permanenten Ausgleich mit dem in der Verwendungstiefe in dem Bohrloch herrschenden statischen Druck enthält, sowie einen zweiten Raum (26) für eine Steuer- und Erfassungseinheit (25), wobei der Behälter unter dem Körper angeordnet ist und an ihm mittels eines weichen Hydraulikkabels (15) befestigt ist, welches das Innere des Behälters mit dem ersten Raum des Körpers verbindet, wobei die an jeden der Empfänger (C1-C3) angeschlossenen elektrischen Leitungen (24) im Inneren des Hydraulikkabels angeordnet sind und mit der Steuer- und Erfassungseinheit in dem zweiter Raum mittels dichter Durchführungen (27, 29) zwischen dem ersten und dem zweiter Raum (16, 26) verbunden sind.

2. System nach Anspruch 1, dadurch gekennzeichnet, daß es eine Kette von mehreren ausdehnbaren Behältern (E1-E3) unmfaßt, die unter dem Körper (1) angeordnet und mittels Hydraulikabelelementen (15) untereinander gehängt sind, die sie sämtlich mit den Mitteln, welche sich in dem zweiten Raum (16) des Körpers (1) befinden und die unter Druck stehende Flüssigkeit abgeben, verbinden und in denen die elektrischen Leitungen verlaufen, die die verschiedenen seismischen oder akustischen Empfänger mit er Steuer- und Erfassungseinheit (25) in dem Körper (1) verbinden.

3. System nach Anspruch 1, dadurch gekennzeichnet, daß es mindestens einen ausdehnbaren schlauchförmigen Behälter umfaßt, der in hydraulischer Weise mit den Mitteln in dem ersten Raum des Körpers verbunden ist, die eine unter Druck stehende Flüssigkeit abgeben, wobei der Behälter mehrere akustische oder seismische Empfänger enthält, die entlang des Behälters an verschiedenen Stellen in die weiche Wand integriert sind, wobei die an diese verschiedenen Empfänger angeschlossenen Leitungen entlang und im Inneren des Hydraulikkabels, das den Behälter mit dem Körger verbindet, zur Steuer- und Erfassungseinheit in dem zweiten Raum aufsteigen.

4. System nach Anspruch 1, dadurch gekennzeichnet, daß jeder Meßfühler (R) ein Geophon ist.

5. System nach Anspruch 1, dadurch gekennzeichnet, daß jedes Empfängerelement (R) ein triaxiales Geophon umfaßt.

6. System nach Anspruch 1, dadurch gekennzeichnet, daß die Mittel zur Einspeisung einer unter Druck stehenden Flüssigkeit eine Pumpe (21) für die Hydraulikkreisläufe umfassen sowie Mittel, die die hydraulische Flüssigkeit unter einem Mindestdruck halten, welcher dem in dem Bohrloch herrschenden Druck entspricht.

## Claims

1. - System for receiving and collecting acoustic or seismic signals in a well or drill hole, having at least one closed expanding chamber (E1) which is provided with a ductile external wall (10), characterised in that it comprises at least one acoustic or seismic receiver (C1-C3) in a case (R) integrated in the ductile wall (10) of the chamber connected to electric conductors (24), a body (1) lowered into a well at the end of a support cable (3) including signal transmission cables connected to a control and recording unit on the surface and electric supply cables, the body having a first compartment (16) containing means (21, 23) for producing on command a pressurised fluid and means (19) for balancing constantly the static pressure prevailing in the well at the operating depth, a second compartment (26) for a control and collection unit (25), the chamber being located below the body and connected to it by a flexible hydraulic cable (15) providing communication between the interior of the chamber and the first compartment of the body, the electric conductors (24) connected to each of the receivers (C1-C3) being located inside the hydraulic cable and connected to the control and collection assembly in the second compartment by means of sealed cross-connectors (27, 29) between the first and second compartments (16, 26).

2. - System in accordance with claim 1, characterised in that it comprises a series of several expanding chambers (E1-E3) located below the body (1) and suspended each below the other by hydraulic cable elements (15) connecting all the chambers with the means producing the pressurised fluid in the first compartment (16) of the body (1) through which pass the electric conductors linking the various seismic or acoustic receivers with the control and collection assembly (25) in the body (1).

3.- System in accordance with claim 1, characterised in that it comprises at least one expanding tubular chamber hydraulically connected to the means producing a pressurised fluid in a first compartment of the body, the chamber housing several acoustic or seismic receivers integrated in the flexible wall at various locations along the length of the chamber, the conductors connected to the various receivers running back to the control and collection unit in the second compartment along and inside the hydraulic cable connecting the chamber to the body.

4. - System in accordance with claim 1, characterised in that each sensor (R) is a geophone.

5. - System in accordance with claim 1, characterised in that each receiving element (R) comprises a triaxial geophone.

6. - System in accordance with claim 1, characterised in that the means for injecting the pressurised fluid comprises a pump (21) on the hydraulic circuits and a means for maintaining the hydraulic fluid at a minimum pressure equal to the pressure prevailing in the well.

FIG.1

FIG.2

**FIG.3**

**FIG.4**

8